# EUROPÄISCHE PATENTSCHRIFT

(11) **EP 2 670 611 B1**
(45) Veröffentlichungstag und Bekanntmachung des Hinweises auf die Patenterteilung: **05.04.2017**
(21) Anmeldenummer: 12703745.5
(22) Anmeldetag: 01.02.2012
(51) Int. Cl.: B60G 7/00, B60G 11/16, B60G 13/00

(54) **EINSCHALIGER FEDERLENKER**
ONE-SHELL SUSPENSION ARM
BRAS DE SUSPENSION MONOCOQUE À RESSORT

(30) Priorität: 02.02.2011 DE 102011000462
(43) Veröffentlichungstag der Anmeldung: 11.12.2013
(73) Patentinhaber: GMF Umformtechnik GmbH, 33647 Bielefeld (DE)
(72) Erfinder: KOORMANN, Ralf, 33818 Leopoldshöhe (DE); HASELHORST, Kai, 33775 Versmold (DE); HERTL, Ronald, 33619 Bielefeld (DE)
(74) Vertreter: Cohausz & Florack
(86) Internationale Anmeldenummer: PCT/EP2012/051680
(87) Internationale Veröffentlichungsnummer: WO 2012/104345

(56) Entgegenhaltungen:
- EP-A1- 1 642 754
- EP-A2- 2 062 754
- DE-A1- 10 261 210
- DE-A1-102009 012 551
- JP-A- 2002 274 133
- JP-A- 2008 024 158
- US-A- 3 797 852
- JOSEF KRAUS: 'Gewichts- Und Kostenreduzierung Durch Hochfeste Stähle Im Fahrwerk', [Online] 03 Februar 2009, XP055148810 Gefunden im Internet: <URL:http://www.innovations-report.de/html/ berichte/maschinenbau/gewichts-kostenreduzi erung-hochfeste-staehle-126591.wihtm?printW ithoutTeasers=true> [gefunden am 2014-10-24]

## Beschreibung

Die Erfindung betrifft einen aus Metallblech geformten, einschaligen Federlenker für eine Radaufhängung eines Kraftfahrzeuges, mit einem ersten Endabschnitt zur Anbindung an einem Fahrwerksträger, vorzugsweise einem Hinterachsträger, einem zweiten Endabschnitt zur radseitigen Anbindung und einem breitenerweiterten Abschnitt zur Abstützung einer Feder, der zwischen den beiden Endabschnitten angeordnet ist und eine Rinne mit nach oben vorstehenden Flanken definiert, wobei in den breitenerweiterten Abschnitt eine Wendelung als Federsitz eingeformt ist. Ferner betrifft die Erfindung eine Mehrlenker-Hinterachse für ein Kraftfahrzeug, umfassend einen Hinterachsträger und daran gelenkig angebundene Radträger, wobei der jeweilige Radträger über einen Federlenker mit dem Hinterachsträger gelenkig verbunden ist.

Federlenker dienen der Führung eines Fahrwerkrades an einer Radaufhängung eines Kraftfahrzeuges. Sie weisen einen Abschnitt zur Abstützung einer Feder oder einer Feder-Stoßdämpfer-Anordnung auf, die ihrerseits gegen die Karosserie abgestützt ist.

Federlenker unterliegen im Fahrbetrieb oft hohen wechselnden Belastungen. Bei nicht ausreichender Steifigkeit des Federlenkers kann es insbesondere im Bereich der Federauflage zu einer Aufweitung bzw. Verformung des Federlenkers kommen. Um eine hohe Belastbarkeit im Bereich der Federauflage zu erzielen, sind bekannte aktuelle Federlenker mit einem oder mehreren verstärkenden Zusatzblechen versehen. Als verstärkende Zusatzbleche werden beispielsweise topfförmige Schalen im Bereich der Federauflage in den breitenerweiterten Abschnitt des Federlenkers eingesetzt. Des Weiteren sind mehrschalige Federlenker bekannt, die im Bereich der Federauflage ein die Feder umschließendes Schließblech aufweisen, das mit den beiden Flanken einer rinnenförmigen Federlenkerschale verschweißt ist.

Aus der DE 10 2004 008 957 A1 ist ein Federlenker für eine Radaufhängung bekannt, der aus einer Federlenkerschale gebildet ist, welche ein im Wesentlichen U-förmiges Profil aufweist, wobei das U-förmige Profil an seiner offenen Seite zwei beidseits der Federauflagefläche angeordnete sichelförmige Brückenbleche aufweist, die durch Nieten, Schrauben oder Schweißverbindungen an der Federlenkerschale befestigt sind.

Die Herstellung und Eingliederung der zusätzlichen Schalen bzw. Schließ- und Überbrückungsbleche erfordert entsprechende Fertigungsschritte, was hinsichtlich der Herstellungskosten ungünstig ist. Zudem besitzen bekannte mehrschalige Federlenker aufgrund ihrer verstärkenden Zusatzbleche mitunter ein relativ hohes Bauteilgewicht.

Aus der DE 10 2006 032 595 A1 ist ein gattungsgemäßer einschaliger Federlenker bekannt, dessen einstückig ausgebildete Federlenkerschale im Bereich des breitenerweiterten Abschnitts eine nach außen ausgestülpte Ringfläche als Federsitz aufweist. Zur besseren Zentrierung der Feder ist innerhalb der Ringfläche eine nach innen gerichtete Erhebung ausgeformt, die mit einer zentralen Öffnung versehen ist. Dieser einschalige Federlenker besitzt gegenüber den bekannten mehrschaligen Federlenkern ein geringeres Bauteilgewicht. Bei seiner Herstellung fallen Fertigungsschritte weg, die bei den mehrschaligen Federlenkern für die Herstellung und Eingliederung der zusätzlichen Schließ- und Überbrückungsbleche erforderlich sind.

Aus der JP 2008 024158 A ist ein anderer Federlenker bekannt.

Des Weiteren ist aus der US 3,797,852 ein einschaliger Federlenker für eine Radaufhängung eines Kraftfahrzeuges bekannt, der einen ersten Endabschnitt zur Anbindung an einem Fahrwerksträger, einen zweiten Endabschnitt zur radseitigen Anbindung und einem breitenerweiterten Abschnitt zur Abstützung einer Feder aufweist, der zwischen den beiden Endabschnitten angeordnet ist und eine Rinne mit nach oben vorstehenden Flanken definiert, wobei in den breitenerweiterten Abschnitt eine Wendelung als Federsitz eingeformt ist. Das Dokument US 3, 797, 852 wird als nächstliegender Stand der Technik betrachtet.

Schließlich ist aus der EP 1 642 754 A1 ein aus einem extrudierten Aluminiumprofil hergestellter Aufhängungsarm bekannt, bei dem ein Stoßdämpfer zwischen einem Federsitz und einer radseitigen Anbindung angeordnet ist.

Der vorliegenden Erfindung lag die Aufgabe zugrunde, einen Federlenker der eingangs genannten Art zur Verfügung zu stellen, der bei relativ geringem Bauteilgewicht sowie günstigen Herstellungskosten eine optimierte Radaufhängung durch eine Verteilung der Kräfte und Momente auf räumlich beabstandete Anbindungs- bzw. Anlenkpunkte ermöglicht und insbesondere verbesserte Federungseigenschaften bietet.

Diese Aufgabe wird erfindungsgemäß durch einen Federlenker mit den Merkmalen des Anspruchs 1 gelöst.

Der erfindungsgemäße einschalige Federlenker ist dadurch gekennzeichnet, dass zwischen der Wendelung und dem zweiten Endabschnitt ein Verbindungsabschnitt zur Anbindung eines Stoßdämpfers ausgebildet ist, wobei die Wendelung derart ausgebildet ist, dass ihre tiefste Stelle in einem maximal 90° betragenden Winkelbereich liegt, dessen Winkelhalbierende senkrecht zur Längsmittelachse des Federlenkers verläuft, wobei die Wendelung eine Öffnung umgibt, an der ein einwärts vorstehender Kragen ausgebildet ist, und wobei das Metallblech des Federlenkers eine Streckgrenze von mindestens 500 MPa aufweist.

Durch die integrierte Wendelung wird eine günstigere Federauflage erzielt, die sich durch eine auf einen größeren Auflagebereich verteilte Kraft- bzw. Lasteinleitung auszeichnet. Zugleich kann durch die Wendelung im Bereich der Federauflage eine vorteilhafte Aussteifung erzielt werden, die es erlaubt, den Federlenker als einschaliges Bauteil ohne Schließbleche oder sonstige verstärkende Zusatzbleche herzustellen. Der an dem Federlenker räumlich beabstandet von der Wendelung ausgebildete Verbindungsabschnitt zur Anbindung eines Stoßdämpfers ermöglicht eine gleichmäßigere Verteilung der Kräfte und Momente auf den Federlenker sowie auf den zugeordneten Fahrzeugaufbau, so dass sich insgesamt eine verbesserte Radaufhängung ergibt.

Der Boden des rinnenförmigen, breitenerweiterten Abschnitts des Federlenkers verbindet die nach oben vorstehenden Flanken der Rinne. Der in der Wendelung vorgesehene Federsitz ist somit durchgehend, d.h. im Wesentlichen ohne Unterbrechung ausgebildet.

Erfindungsgemäß ist die Wendelung des Federlenkers außerdem derart ausgebildet, dass ihre tiefste Stelle in einem maximal 90°, vorzugsweise maximal 60° betragenden Winkelbereich liegt, dessen Winkelhalbierende senkrecht zur Längsmittelachse des Federlenkers verläuft. Diese Ausgestaltung ist fertigungstechnisch günstig. Insbesondere wird hierdurch eine Überdehnung des Metallblechs während des Formens des Federlenkers bzw. der Wendelung sicher verhindert.

Des Weiteren umgibt erfindungsgemäß die Wendelung des Federlenkers eine Öffnung (Lochöffnung), an der ein einwärts vorstehender Kragen ausgebildet ist. Der Kragen dient als Zentriervorsprung für die auf dem Federlenker abgestützte Schraubenfeder. Gleichzeitig verbessert der Kragen die Steifigkeit des Federlenkers. Der Kragen ist vorzugsweise ringförmig ausgebildet.

Der erfindungsgemäße Federlenker ist des Weiteren aus Metallblech hergestellt, welches eine Streckgrenze von mindestens 500 MPa, vorzugsweise von mindestens 650 MPa aufweist.

Die Kontaktfläche (Federauflagefläche) zwischen Feder und Boden des Federlenkers erstreckt sich vorzugsweise über einen Wendelbereich von mindestens 180°, bevorzugt mindestens 210°, und besonders bevorzugt mindestens 240°. Hierdurch wird ein sehr gleichmäßiger Krafteintrag in den Federlenker und damit eine hohe Festigkeit des Federlenkers bei relativ geringem Materialeinsatz erreicht. Dies bedeutet zugleich eine Gewichtsreduktion sowie ein reduziertes Bauvolumen.

Nach einer weiteren vorteilhaften Ausgestaltung des erfindungsgemäßen Federlenkers weist ein Abschnitt der Wendelung eine bogenförmige Sicke auf, die räumlich beabstandet von der tiefsten Stelle der Wendelung beginnt und sich in Richtung der höchsten Stelle der Wendelung erstreckt. Die Sicke vergrößert die Kontaktfläche zwischen Feder und Federlenker und vergleichmäßigt so die Krafteinleitung in den Federlenker. Zudem verbessert die Sicke die Steifigkeit des Federlenkers im Bereich der Federauflage. Im Falle der Verwendung eines Federsitzeinsatzes dient die Sicke als entsprechende Fixierung sowie Ausrichtung.

Eine weitere vorteilhafte Ausgestaltung des erfindungsgemäßen Federlenkers besteht darin, dass die Flanken des breitenerweiterten Abschnittes durchgehend bis zu dem zweiten Endabschnitt verlaufen und einen gabelförmigen Lagerabschnitt zur Anbindung eines Radträgers sowie zur Anbindung des Stoßdämpfers definieren, wobei der gabelförmige Lagerabschnitt einen nischenförmigen Ausschnitt begrenzt, der sich von dem zweiten Endabschnitt bis mindestens zu dem der Anbindung des Stoßdämpfers dienenden Verbindungsabschnitt erstreckt. Durch die Anbindung des Stoßdämpfers an den Flanken der rinnenförmigen Federlenkerschale wird die Steifigkeit des Federlenkers weiter verbessert. Der in dem gabelförmigen Lagerabschnitt vorgesehene Ausschnitt, der sich mindestens bis zu dem der Anbindung des Stoßdämpfers dienenden Verbindungsabschnitt erstreckt, verringert das Bauteilgewicht des Federlenkers.

Für die Steifigkeit des relativ leichtgewichtigen Federlenkers ist es ferner günstig, wenn an dem gabelförmigen Lagerabschnitt gemäß einer weiteren bevorzugten Ausgestaltung der Erfindung flanschförmige, einander zugewandte Kragen oder Abkantungen ausgebildet sind, welche den nischenförmigen Ausschnitt begrenzen.

Eine weitere vorteilhafte Ausgestaltung des erfindungsgemäßen Federlenkers ist dadurch gekennzeichnet, dass der Verbindungsabschnitt zur Anbindung des Stoßdämpfers miteinander fluchtende Öffnungen aufweist, die innerhalb von einander gegenüberliegenden, zur Oberseite des Federlenkers hin mündenden Sicken angeordnet sind. Diese Sicken verbessern nicht nur die Steifigkeit des Federlenkers, sie erleichtern auch bei entsprechender Dimensionierung und Formgebung die Montage eines Lagerkerns des Stoßdämpfers. Vorzugsweise nimmt der Flankenabstand jeder dieser Sicken von ihrem unteren Ende bis zur Oberseite des Federlenkers hin allmählich zu. Diese Sicken weisen in diesem Fall eine im Wesentlichen parabelförmige Flanke auf.

Eine weitere vorteilhafte Ausgestaltung des erfindungsgemäßen Federlenkers besteht darin, dass die Flanken des breitenerweiterten Abschnittes durchgehend bis zu dem ersten End abschnitt des Federlenkers verlaufen und einen gabelförmigen Lagerabschnitt zur Anbindung des Federlenkers an einem Fahrwerksträger, vorzugsweise Hinterachsträger definieren, wobei der gabelförmige Lagerabschnitt miteinander fluchtende Öffnungen mit Kragen zur Aufnahme einer Lagerbuchse aufweist und einen nischenförmigen Ausschnitt begrenzt, der sich mit einer Tiefe in Richtung des Federsitzes erstreckt, die größer als der Durchmesser, vorzugsweise größer als der doppelte Durchmesser der der Aufnahme der Lagerbuchse dienenden Kragen ist. Diese Kragen, die auch als Durchzüge bezeichnet werden können, sind vorzugsweise nach innen gerichtet, d.h. einander zugewandt. Der relativ tiefe nischenförmige Ausschnitt in Richtung des Federsitzes verringert wiederum das Bauteilgewicht des Federlenkers. Für die Steifigkeit des Federlenkers ist es ferner günstig, wenn an diesem gabelförmigen Lagerabschnitt nach einer weiteren bevorzugten Ausgestaltung flanschförmige, einander zugewandte Kragen oder Abkantungen ausgebildet sind, welche den nischenförmigen Ausschnitt begrenzen.

In weiterer Ausgestaltung des erfindungsgemäßen Federlenkers kann an mindestens einer der Flanken der rinnenförmigen Federlenkerschale oder an mindestens einem daran nach außen abgewinkelten Kragen mindestens eine Öffnung zur Anbindung eines Höhenstandssensors ausgebildet sein. Der Höhenstandssensor ist beispielsweise Teil einer Vorrichtung zur automatischen Leuchtweitenregulierung der Frontscheinwerfer und/oder einer Vorrichtung zur Fahrwerksniveauregulierung.

Nachfolgend wird die Erfindung anhand einer ein Ausführungsbeispiel darstellenden Zeichnung näher erläutert. Es zeigen:

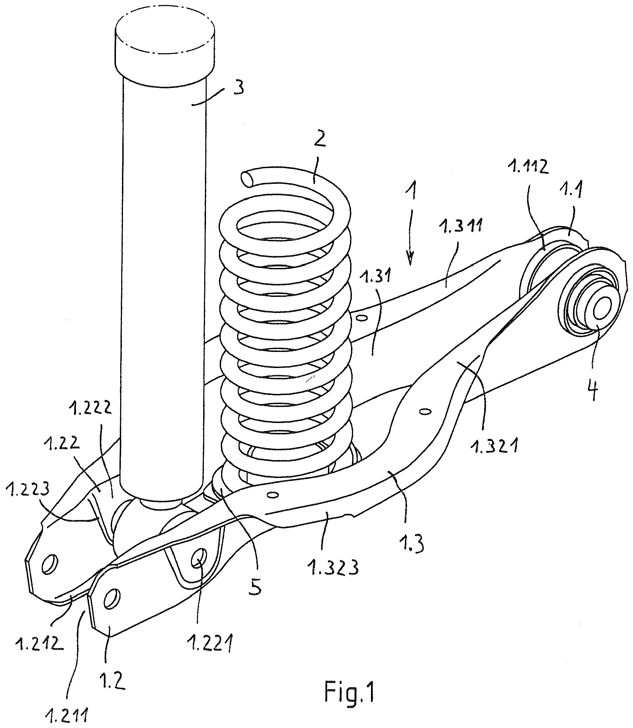

- Fig. 1: einen erfindungsgemäßen Federlenker mit einer darauf abgestützten Feder, einem räumlich beabstandet dazu angebundenen Stoßdämpfer sowie einer Lagerbuchse, in perspektivischer Darstellung;
- Fig. 2: den Federlenker der Fig. 1 ohne Feder, Stoßdämpfer und Lagerbuchse, in perspektivischer Draufsicht; und
- Fig. 3: eine Querschnittansicht des Federlenkers entlang der Schnittlinie III - III in Fig. 2.

In der Zeichnung ist ein Federlenker 1 für eine Radaufhängung eines Kraftfahrzeuges dargestellt. Der Federlenker 1 ist als einschaliges Bauteil aus einer Metallplatine durch Umformen hergestellt. Beim dem Federlenker 1 handelt es sich um ein Tiefziehteil. Er ist im Wesentlichen durch Tiefziehen hergestellt. Der Federlenker 1 weist einen ersten Endabschnitt 1.1 zur Anbindung an einem Fahrwerksträger, vorzugsweise einem Hinterachsträger, und einen zweiten Endabschnitt 1.2 zur Anbindung an einem Radträger auf. Zwischen den beiden Endabschnitten 1.1, 1.2 ist breitenerweiterten Abschnitt 1.3 zur Abstützung einer Feder (Schraubenfeder) 2 ausgebildet.

Der Federlenker 1 besteht aus hochfestem Metallblech, vorzugsweise Stahlblech. Das zu seiner Herstellung verwendete Metall- bzw. Stahlblech hat eine Streckgrenze von mehr als 650 MPa.

Der die Feder 2 tragende, breitenerweiterte Abschnitt 1.3 des Federlenkers 1 ist im Wesentlichen rinnenförmig ausgebildet. Die Flanken 1.31, 1.32 der Rinne stehen gegenüber deren Boden 1.33 nach oben vor. In diesen Abschnitt ist eine Wendelung 1.34 als Federsitz eingeformt, durch die eine verbesserte Federauflage erzielt wird. Innerhalb der Wendelung 1.34 ist eine Öffnung 1.35 ausgeschnitten, an der ein nach innen bzw. nach oben vorstehender Kragen 1.36 als Durchzug ausgebildet ist. Der Kragen (Durchzug) 1.36 ist ringförmig ausgebildet und ragt in die Schraubenfeder 2 und stellt eine Federzentrierung dar.

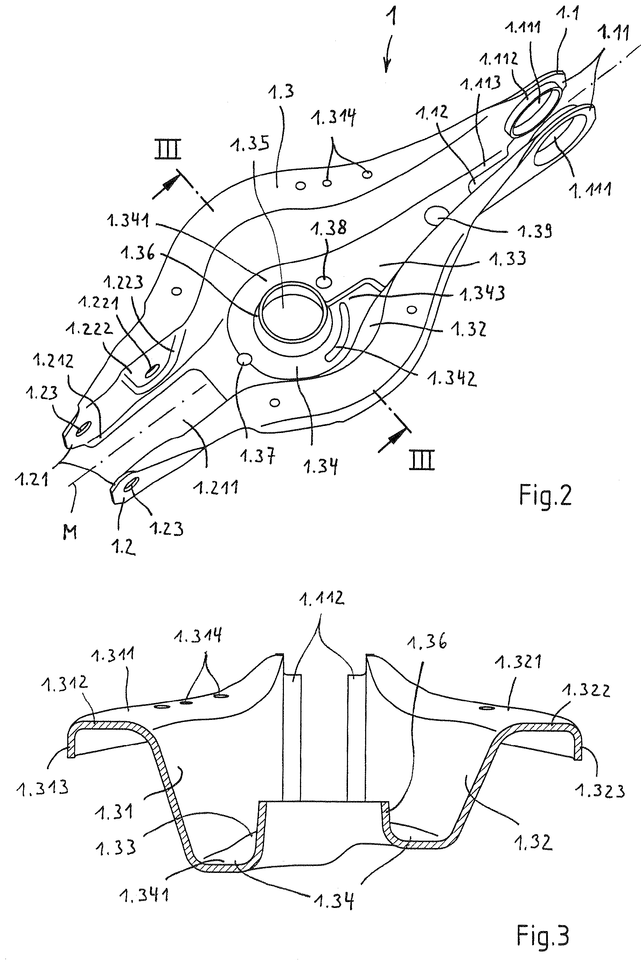

Der Boden 1.33 der Rinne verbindet die nach oben vorstehenden Flanken 1.31, 1.32 des Federlenkers 1. Der in der Wendelung 1.34 vorgesehene Federsitz ist somit ununterbrochen ausgebildet, wie insbesondere in Fig. 2 gezeigt ist.

Die Wendelung 1.34 ist derart geformt, dass ihre tiefste Stelle 1.341 in einem maximal 90°, vorzugsweise maximal 60° betragenden Winkelbereich liegt, dessen Winkelhalbierende senkrecht zur Längsmittelachse M des Federlenkers 1 verläuft. Vorzugsweise endet das untere Ende der schraubenförmigen Feder 2 etwa an der senkrecht zur Längsmittelachse M des Federlenkers 1 verlaufenden Querschnittsebene, wo der breitenerweiterte Federlenkerabschnitt 1.3 seine größte Breite besitzt. Ein Abschnitt der Wendelung 1.34 ist mit einer bogenförmigen Sicke 1.342 versehen, die räumlich beabstandet von der tiefsten Stelle 1.341 der Wendelung 1.34 beginnt und sich in Richtung der höchsten Stelle 1.343 der Wendelung 1.34 erstreckt. Die Sicke 1.342 endet vorzugsweise an oder nahe der höchsten Stelle 1.343 der Wendelung 1.34.

Die Flanken 1.31, 1.32 des breitenerweiterten Abschnittes 1.3 verlaufen durchgehend bis zu dem radträgerseitigen Endabschnitt 1.2. Sie definieren einen gabelförmigen Lagerabschnitt 1.21 zur Anbindung eines Radträgers.

Des Weiteren weist der Federlenker 1 einen Verbindungsabschnitt 1.22 zur Anbindung eines Stoßdämpfers 3 auf. Dieser Verbindungsabschnitt 1.22 ist räumlich beabstandet zwischen der als Federsitz dienenden Wendelung 1.34 und dem radträgerseitigen Endabschnitt 1.2 des Federlenkers ausgebildet. Der Abschnitt 1.22 zur Anbindung des Stoßdämpfers 3 liegt ebenfalls an dem gabelförmigen Lagerabschnitt 1.21, welcher der Radträgeranbindung dient. Er weist miteinander fluchtende Öffnungen 1.221 auf, die innerhalb von einander gegenüberliegenden, zur Oberseite des Federlenkers 1 hin mündenden Sicken 1.222 angeordnet sind. Die Flanken 1.223 der jeweiligen Sicke 1.222 nähern sich von der Oberseite des Federlenkers 1 zu dessen Unterseite hin einander an und gehen unterhalb der Öffnung 1.221 bogenförmig ineinander über.

Der gabelförmige Lagerabschnitt 1.21 begrenzt einen nischenförmigen Ausschnitt 1.211, der zwischen der Wendelung 1.34 und dem Verbindungsabschnitt 1.22 zur Anbindung des Stoßdämpfers 3 beginnt und an dem radträgerseitigen Endabschnitt 1.2 mündet. An dem gabelförmigen Lagerabschnitt 1.21 sind flanschförmige, einander zugewandte Abkantungen oder Kragen 1.212 ausgebildet, welche die Längsseiten des nischenförmigen Ausschnitts 1.211 begrenzen.

Ferner ist zu erkennen, dass die Flanken 1.31, 1.32 des breitenerweiterten Abschnittes 1.3 des Federlenkers auch durchgehend bis zu dem Endabschnitt 1.1 verlaufen, mit dem der Federlenker 1 an einem Hinterachsträger oder einem anderen Fahrwerksträger angelenkt wird. Die Flanken 1.31, 1.32 definieren dort wiederum einen gabelförmigen Lagerabschnitt 1.11, der miteinander fluchtende Öffnungen 1.111 mit Kragen 1.112 zur Aufnahme einer Lagerbuchse 4, vorzugsweise eines Gummimetalllagers aufweist. Die Kragen 1.112 sind als Durchzüge der Öffnungen 1.111 hergestellt und nach innen gerichtet, d.h. einander zugewandt.

Der einem Hinterachsträger zugeordnete Endabschnitt 1.1 des Federlenkers 1 weist ebenfalls einen nischenförmigen Ausschnitt 1.12 auf, der zum dortigen Ende des Federlenkers 1 hin mündet. Die Längsseiten des Ausschnitts 1.12 sind durch an dem gabelförmigen Lagerabschnitt 1.11 ausgebildete flanschförmige Abkantungen oder Kragen 1.113 begrenzt. Der Ausschnitt 1.12 erstreckt sich vom Ende des Federlenkers 1 in Richtung des Federsitzes mit einer Tiefe, die mehr als den zweifachen Durchmesser der der Aufnahme der Lagerbuchse 4 dienenden Öffnung 1.111 misst.

Die Flanken 1.31, 1.32 des rinnenförmigen, einschaligen Federlenkers 1 sind an dessen Oberseite als Kragen 1.311, 1.321 flanschartig nach außen umgebogen. Diese Kragen 1.311, 1.321 verlaufen jeweils durchgehend zwischen den beiden Endabschnitten 1.1, 1.2 und erstrecken sich vom radträgerseitigen Anbindungsabschnitt 1.2 vorzugsweise bis zu dem gabelförmigen Lagerabschnitt 1.11 am anderen Ende des Federlenkers 1. Die Kragen 1.311, 1.321 sind im Bereich des erweiterten Abschnittes 1.3 des Federlenkers 1 zusätzlich nach unten umgebogen, so dass sie einen ersten im Wesentlichen horizontalen Abschnitt 1.312, 1.322 und einen sich daran anschließenden äußeren Abschnitt 1.313, 1.323 aufweisen, der im Wesentlichen vertikal bzw. senkrecht dazu verläuft.

Wie insbesondere Fig. 2 entnommen werden kann, sind an mindestens einer der Flanken 1.31 bzw. an mindestens einem der daran nach außen abgewinkelten Kragen 1.311 eine oder mehrere Öffnungen 1.314 zur Anbindung eines Höhenstandssensors (nicht gezeigt) ausgebildet.

Im Boden 1.33 der rinnenförmigen Federlenkerschale sind eine Sicke 1.342 und eine Öffnung 1.37 ausgeschnitten, die der Fixierung sowie Ausrichtung eines aus Gummi oder Kunststoff hergestellten Federsitzeinsatzes 5 dienen. Der Einsatz 5 optimiert die Federauflage. Es handelt sich bei dem Einsatz 5 um ein optionales Teil des Federlenkers 1. Außerdem kann in dem Boden 1.33 der Federlenkerschale mindestens eine Öffnung 1.39 zur Gewichtsreduzierung des Federlenkers 1 ausgebildet sein. Die Öffnung 1.38 dient als Schmutz- bzw. Wasserablauf.

Der erfindungsgemäße Federlenker 1 zeichnet sich durch ein geringes Bauteilgewicht sowie günstige Herstellungskosten aus und bietet eine optimierte Radaufhängung durch eine Verteilung der Kräfte und Momente auf räumlich beabstandete Anbindungs- bzw. Anlenkpunkte. Er ist insbesondere für eine Mehrlenker-Hinterachse geeignet.

Die Ausführung des erfindungsgemäßen Federlenkers ist nicht auf das in der Zeichnung dargestellte Ausführungsbeispiel beschränkt. Vielmehr sind zahlreiche Varianten denkbar, die auch bei von dem dargestellten Ausführungsbeispiel abweichender Ausführung von der in den Ansprüchen angegebenen Erfindung Gebrauch machen. So können beispielsweise auch die fluchtenden Öffnungen 1.23 zur radträgerseitigen Anbindung als Durchzüge ausgebildet sein. Ferner liegt es auch im Rahmen der Erfindung, an dem räumlich getrennt von der Schraubenfeder 2 angeordneten Stoßdämpfer 3 einen Stabilisator (nicht gezeigt) über eine Pendelstütze (Koppelstange) anzubinden.

## Patentansprüche

1. Aus Metallblech geformter, einschaliger Federlenker (1) für eine Radaufhängung eines Kraftfahrzeuges, mit einem ersten Endabschnitt (1.1) zur Anbindung an einem Fahrwerksträger, vorzugsweise einem Hinterachsträger, einem zweiten Endabschnitt (1.2) zur radseitigen Anbindung und einem breitenerweiterten Abschnitt (1.3) zur Abstützung einer Feder (2), der zwischen den beiden Endabschnitten (1.1, 1.2) angeordnet ist und eine Rinne mit nach oben vorstehenden Flanken (1.31, 1.32) definiert, wobei in den breitenerweiterten Abschnitt (1.3) eine Wendelung (1.34) als Federsitz eingeformt ist, **dadurch gekennzeichnet, dass** zwischen der Wendelung (1.34) und dem zweiten Endabschnitt (1.2) ein Verbindungsabschnitt (1.22) zur Anbindung eines Stoßdämpfers (3) ausgebildet ist, wobei die Wendelung (1.34) derart ausgebildet ist, dass ihre tiefste Stelle (1.341) in einem maximal 90° betragenden Winkelbereich liegt, dessen Winkelhalbierende senkrecht zur Längsmittelachse (M) des Federlenkers (1) verläuft, wobei die Wendelung (1.34) eine Öffnung (1.35) umgibt, an der ein einwärts vorstehender Kragen (1.36) ausgebildet ist, und wobei das Metallblech des Federlenkers (1) eine Streckgrenze von mindestens 500 MPa aufweist.

2. Federlenker nach Anspruch 1, **dadurch gekennzeichnet, dass** die tiefste Stelle (1.341) der Wendelung (1.34) in einem maximal 60° betragenden Winkelbereich liegt, dessen Winkelhalbierende senkrecht zur Längsmittelachse (M) des Federlenkers (1) verläuft.

3. Federlenker nach Anspruch 1 oder 2, **dadurch gekennzeichnet, dass** ein Abschnitt der Wendelung (1.34) eine bogenförmige Sicke (1.342) aufweist, die räumlich beabstandet von der tiefsten Stelle (1.341) der Wendelung (1.34) beginnt und sich in Richtung der höchsten Stelle (1.343) der Wendelung (1.34) erstreckt.

4. Federlenker nach einem der Ansprüche 1 bis 3, **dadurch gekennzeichnet, dass** die Flanken (1.31, 1.32) des breitenerweiterten Abschnittes (1.3) durchgehend bis zu dem zweiten Endabschnitt (1.2) verlaufen und einen gabelförmigen Lagerabschnitt (1.21) zur Anbindung eines Radträgers sowie zur Anbindung des Stoßdämpfers (3) definieren, wobei der gabelförmige Lagerabschnitt (1.21) einen nischenförmigen Ausschnitt (1.211) begrenzt, der sich von dem zweiten Endabschnitt (1.2) bis mindestens zu dem der Anbindung des Stoßdämpfers (3) dienenden Verbindungsabschnitt (1.22) erstreckt.

5. Federlenker nach Anspruch 4, **dadurch gekennzeichnet, dass** an dem gabelförmigen Lagerabschnitt (1.21) flanschförmige, einander zugewandte Kragen oder Abkantungen (1.212) ausgebildet sind, welche den nischenförmigen Ausschnitt (1.211) begrenzen.

6. Federlenker nach einem der Ansprüche 1 bis 5, **dadurch gekennzeichnet, dass** der Verbindungsabschnitt (1.22) zur Anbindung des Stoßdämpfers (3) miteinander fluchtende Öffnungen (1.221) aufweist, die innerhalb von einander gegenüberliegenden, zur Oberseite des Federlenkers hin mündenden Sicken (1.222) angeordnet sind.

7. Federlenker nach Anspruch 6, **dadurch gekennzeichnet, dass** der Flankenabstand jeder dieser Sicken (1.222) von ihrem unteren Ende bis zur Oberseite des Federlenkers (1) hin allmählich zunimmt.

8. Federlenker nach einem der Ansprüche 1 bis 7, **dadurch gekennzeichnet, dass** die Flanken (1.31, 1.32) des breitenerweiterten Abschnittes (1.3) durchgehend bis zu dem ersten Endabschnitt (1.1) verlaufen und einen gabelförmigen Lagerabschnitt (1.11) zur Anbindung des Federlenkers (1) an einem Fahrwerksträger definieren, wobei der gabelförmige Lagerabschnitt (1.11) miteinander fluchtende Öffnungen (1.111) mit Kragen (1.112) zur Aufnahme einer Lagerbuchse (4) aufweist und einen nischenförmigen Ausschnitt (1.12) begrenzt, der sich mit einer Tiefe in Richtung des Federsitzes erstreckt, die größer als der Durchmesser, vorzugsweise größer als der doppelte Durchmesser der der Aufnahme der Lagerbuchse (4) dienenden Kragen (1.112) ist.

9. Federlenker nach Anspruch 8, **dadurch gekennzeichnet, dass** an dem gabelförmigen Lagerabschnitt (1.11) flanschförmige, einander zugewandte Kragen oder Abkantungen (1.113) ausgebildet sind, welche den nischenförmigen Ausschnitt (1.12) begrenzen.

10. Federlenker nach einem der Ansprüche 1 bis 9, **dadurch gekennzeichnet, dass** an mindestens einer der Flanken (1.31, 1.32) oder an mindestens einem daran nach außen abgewinkelten Kragen (1.311, 1.321) mindestens eine Öffnung (1.314) zur Anbindung eines Höhenstandssensors ausgebildet ist.

11. Federlenker nach einem der Ansprüche 1 bis 10, **dadurch gekennzeichnet, dass** sein Metallblech eine Streckgrenze von mindestens 650 MPa aufweist.

12. Mehrlenker-Hinterachse für ein Kraftfahrzeug, umfassend einen Hinterachsträger und daran gelenkig angebundene Radträger, **dadurch gekennzeichnet, dass** der jeweilige Radträger über einen Federlenker (1) gemäß einem der Ansprüche 1 bis 11 mit dem Hinterachsträger gelenkig verbunden ist.

## Claims

1. One-shell spring suspension arm (1) formed of sheet metal for a wheel suspension of a motor vehicle, comprising a first end section (1.1) for connection to a chassis carrier, preferably a rear axle carrier, a second end section (1.2) for wheel-side connection, and a width-expanded section (1.3) for supporting a spring (2), which is arranged between the two end sections (1.1, 1.2) and defines a trough having upwardly projecting flanks (1.31, 1.32), a spiral (1.34) being integrally formed in the width-expanded section (1.3) as a spring seat, **characterised in that** a connection section (1.22) for connecting a shock absorber (3) is formed between the spiral (1.34) and the second end section (1.2), the spiral (1.34) being formed in such a way that the lowest point (1.341) thereof is in an angular range of at most 90°, the angle bisector of which extends perpendicular to the longitudinal central axis (M) of the spring suspension arm (1), the spiral (1.34) surrounding an opening (1.35) at which an inwardly projecting collar (1.36) is formed, and the sheet metal of the spring suspension arm (1) having a yield point of at least 500 MPa.

2. Spring suspension arm according to claim 1, **characterised in that** the lowest point (1.341) of the spiral (1.34) is in an angular range of at most 60°, the angle bisector of which extends perpendicular to the longitudinal central axis (M) of the spring suspension arm (1).

3. Spring suspension arm according to either claim 1 or claim 2, **characterised in that** a section of the spiral (1.34) comprises an arc-shaped bead (1.342) which starts at a distance in space from the lowest point (1.341) of the spiral (1.34) and extends towards the highest point (1.343) of the spiral (1.34).

4. Spring suspension arm according to any one of claims 1 to 3, **characterised in that** the flanks (1.31, 1.32) of the width-expanded section (1.3) extend continuously as far as the second end section (1.2) and define a fork-shaped mounting section (1.21) for connecting a wheel carrier and for connecting the shock absorber (3), the fork-shaped mounting section (1.21) delimiting a niche-shaped recess (1.211) which extends from the second end section (1.2) at least as far as the connection section (1.22) which serves for connecting the shock absorber (3).

5. Spring suspension arm according to claim 4, **characterised in that** flange-shaped, mutually facing collars or bends (1.212) are formed on the fork-shaped mounting section (1.21) and delimit the niche-shaped recess (1.211).

6. Spring suspension arm according to any one of claims 1 to 5, **characterised in that** the connection section (1.22) for connecting the shock absorber (3) comprises mutually flush openings (1.221) which are arranged inside mutually opposing beads (1.222) which open towards the upper side of the spring suspension arm.

7. Spring suspension arm according to claim 6, **characterised in that** the flank distance of each of these beads (1.222) gradually increases from the lower end thereof to the upper side of the spring suspension arm (1).

8. Spring suspension arm according to any one of claims 1 to 7, **characterised in that** the flanks (1.31, 1.32) of the width-expanded section (1.3) extend continuously as far as the first end section (1.1) and define a fork-shaped mounting section (1.11) for connecting the spring suspension arm (1) to a chassis carrier, the fork-shaped mounting section (1.11) comprising mutually flush openings (1.111) having collars (1.112) for receiving a bearing bush (4) and delimiting a niche-shaped recess (1.12) which extends in the direction of the spring seat by a depth which is greater than the diameter, preferably greater than twice the diameter, of the collars (1.112) serving to support the bearing bush (4).

9. Spring suspension arm according to claim 8, **characterised in that** flange-shaped, mutually facing collars or bends (1.113) are formed on the fork-shaped mounting section (1.11) and delimit the niche-shaped recess (1.12).

10. Spring suspension arm according to any one of claims 1 to 9, **characterised in that** at least one opening (1.314) for connecting a level sensor is formed on at least one of the flanks (1.31, 1.32) or on at least one collar (1.311, 1.321) which is outwardly angled thereon.

11. Spring suspension arm according to any one of claims 1 to 10, **characterised in that** the sheet metal thereof has a yield point of at least 650 MPa.

12. Multi-link rear axle for a motor vehicle, comprising a rear axle carrier and wheel carriers articulated thereto, **characterised in that** the respective wheel carrier is articulated to the rear axle carrier via a spring suspension arm (1) according to any one of claims 1 to 11.

## Revendications

1. Bras de suspension à ressort (1) monocoque, formé à partir d'une tôle métallique, prévu pour une suspension des roues d'un véhicule automobile, comprenant une première partie d'extrémité (1.1) servant à la fixation sur un support de châssis, de préférence un support d'essieu arrière, une deuxième partie d'extrémité (1.2) servant à la fixation côté roue et une partie agrandie en largeur (1.3) et servant à supporter un ressort (2), partie agrandie en largeur qui est disposée entre les deux parties d'extrémité (1.1, 1.2) et définit un chenal ayant des flancs (1.31, 1.32) faisant saillie vers le haut, où une partie en forme d'hélice (1.34) servant de siège du ressort est moulée dans la partie agrandie en largeur (1.3), **caractérisé en ce qu'**une partie d'assemblage (1.22) servant à la fixation d'un amortisseur (3) est configurée entre la partie en forme d'hélice (1.34) et la deuxième partie d'extrémité (1.2), où la partie en forme d'hélice (1.34) est configurée de manière telle, que son point le plus bas (1.341) se situe dans une plage angulaire atteignant au maximum 90°, plage angulaire dont la bissectrice s'étend de façon perpendiculaire à l'axe médian longitudinal (M) du bras de suspension à ressort (1), où la partie en forme d'hélice (1.34) entoure une ouverture (1.35) sur laquelle est configuré un rebord (1.36) faisant saillie vers l'intérieur, et où la tôle métallique du bras de suspension à ressort (1) présente une limite apparente d'élasticité au moins de 500 MPa.

2. Bras de suspension à ressort selon la revendication 1, **caractérisé en ce que** le point le plus bas (1.341) de la partie en forme d'hélice (1.34) se situe dans une plage angulaire atteignant au maximum 60°, plage angulaire dont la bissectrice s'étend de façon perpendiculaire à l'axe médian longitudinal (M) du bras de suspension à ressort (1).

3. Bras de suspension à ressort selon la revendication 1 ou 2, **caractérisé en ce qu'**une portion de la partie en forme d'hélice (1.34) présente une moulure (1.342) de forme arquée qui commence en étant physiquement à distance du point le plus bas (1.341) de la partie en forme d'hélice (1.34) et s'étend en direction du point le plus élevé (1.343) de la partie en forme d'hélice (1.34).

4. Bras de suspension à ressort selon l'une quelconque des revendications 1 à 3, **caractérisé en ce que** les flancs (1.31, 1.32) de la partie agrandie en largeur (1.3) s'étendent de façon continue jusqu'à la deuxième partie d'extrémité (1.2) et définissent une partie de palier (1.21), en forme de fourche, servant à la fixation d'un support de roue ainsi qu'à la fixation de l'amortisseur (3), où la partie de support (1.21) en forme de fourche délimite une découpe (1.211) en forme de niche qui s'étend depuis la deuxième partie d'extrémité (1.2) jusqu'au moins la partie d'assemblage (1.22) servant à la fixation de l'amortisseur (3).

5. Bras de suspension à ressort selon la revendication 4, **caractérisé en ce que** des rebords ou bords repliés (1.212) en forme de bride, tournés l'un vers l'autre, sont formés sur la partie de palier (1.21) en forme de fourche, lesquels rebords ou bords repliés délimitent la découpe (1.211) en forme de niche.

6. Bras de suspension à ressort selon l'une quelconque des revendications 1 à 5, **caractérisé en ce que** la partie d'assemblage (1.22) servant à la fixation de l'amortisseur (3) présente des ouvertures (1.221) alignées les unes par rapport aux autres, ouvertures qui sont disposées à l'intérieur de moulures (1.222) se faisant face les unes les autres et débouchant en direction de la partie supérieure du bras de suspension à ressort.

7. Bras de suspension à ressort selon la revendication 6, **caractérisé en ce que** la distance entre les flancs de chacune de ces moulures (1.222) augmente progressivement à partir de l'extrémité inférieure desdites moulures, jusqu'à la partie supérieure du bras de suspension à ressort (1).

8. Bras de suspension à ressort selon l'une quelconque des revendications 1 à 7, **caractérisé en ce que** les flancs (1.31, 1.32) de la partie agrandie en largeur (1.3) s'étendent de façon continue jusqu'à la première partie d'extrémité (1.1) et définissent une partie de palier (1.11), en forme de fourche, servant à la fixation du bras de suspension à ressort (1) sur un support de châssis, où la partie de palier (1.11) en forme de fourche présente des ouvertures (1.111) alignées les unes par rapport aux autres et comportant des rebords (1.112) servant au logement d'un coussinet de palier (4) et délimite une découpe (1.12) en forme de niche, découpe qui s'étend en direction du siège du ressort, en ayant une profondeur qui est supérieure au diamètre, de préférence supérieure à deux fois le diamètre des rebords (1.112) servant au logement du coussinet de palier (4).

9. Bras de suspension à ressort selon la revendication 8, **caractérisé en ce que** des rebords ou bords repliés (1.113) en forme de bride, tournés l'un vers l'autre, sont configurés sur la partie de palier (1.11) en forme de fourche, lesquels rebords ou bords repliés délimitent la découpe (1.12) en forme de niche.

10. Bras de suspension à ressort selon l'une quelconque des revendications 1 à 9, **caractérisé en ce qu'**au moins une ouverture (1.314) servant à la fixation d'un capteur de niveau de hauteur est configurée sur au moins l'un des flancs (1.31, 1.32) ou bien sur au moins un rebord (1.311, 1.321) coudé vers l'extérieur et formé sur l'un desdits flancs.

11. Bras de suspension à ressort selon l'une quelconque des revendications 1 à 10, **caractérisé en ce que** la tôle métallique dudit bras de suspension à ressort présente une limite apparente d'élasticité au moins de 650 MPa.

12. Essieu arrière à plusieurs bras de suspension pour un véhicule automobile, comprenant un support d'essieu arrière et des supports de roues fixés de manière articulée sur ledit support d'essieu arrière, **caractérisé en ce que** le support de roue respectif est relié de manière articulée au support d'essieu arrière, par un bras de suspension à ressort (1) selon l'une quelconque des revendications 1 à 11.
